# EUROPEAN PATENT SPECIFICATION

(11) **EP 0 361 458 B1**
(45) Date of publication and mention of the grant of the patent: **18.11.1993**
(21) Application number: 89117895.6
(22) Date of filing: 27.09.1989
(51) Int. Cl.: F16D 13/68

(54) **Clutch disk assembly**
Kupplungsscheibe
Disque d'embrayage

(30) Priority: 29.09.1988 JP 244761/88
(43) Date of publication of application: 04.04.1990
(73) Proprietor: AISIN SEIKI KABUSHIKI KAISHA, Kariya City Aichi Pref. (JP)
(72) Inventor: Maki, Naoyuki, Hazu-gun Aichi-pref. (JP)
(74) Representative: Tiedtke, Harro, Dipl.-Ing.

(56) References cited:
- DE-A- 3 429 705
- DE-A- 3 832 925
- FR-A- 2 538 479
- FR-A- 2 574 014
- GB-A- 2 042 680
- PATENT ABSTRACTS OF JAPAN, vol. 7, no. 79 (M-204)[1224], 31st March 1983;& JP-A-58 005 533 (TOYO KOGYO K.K.) 12-01-1983

## Description

### Field of the invention

This invention relates to a clutch disk assembly having a variable hysteresis mechanism for use in an automotive vehicle.

### Description of the Related Art

A conventional clutch assembly has a variable hysteresis mechanism which changes the hysteresis at multiple stages of operation. However, a clutch assembly of this type has a flight or series of steps between a first hysteresis stage and a second hysteresis stage and is utilized in a driving system in which noises and vibrations are produced according to variations in engine torque. On the other hand, a traditional clutch disk assembly with a variable hysteresis mechanism is also known which changes the hysteresis in smooth non-stepwise action according to the change of a torsion angle.

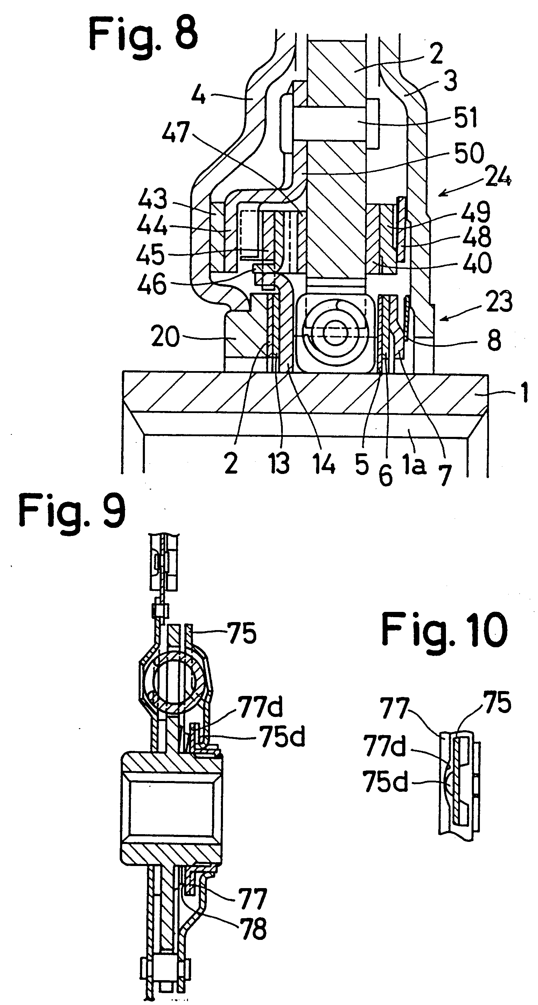

As prior art, Japanese Patent Laid-Open Number 58-637(1983) is shown in Figs. 9 and 10. In this conventional clutch disk assembly, a cam mechanism is disposed between a sub plate 75 and a thrust plate (control member) 77, and spring load is varied with the cam mechanism in response to the torsion angle. Namely, the torque-variation transmitted to the sub plate 75 is changed to an axial displacement through the cam mechanism (cam 75d and cam face 77d) and the axial displacement changes the load of cone spring 78, thereby increasing and decreasing the hysteresis.

However, in this mechanism, the spring load is always acting on the cam and, due to the sliding movement of the cam it is easily abraded. Further, the hysteresis is generated from a low level to a high level by the variable hysteresis, so that when the cam is abraded, the load of the spring 78 changes. As a result, the stable hysteresis can not be obtained.

From the FR-A-2574 014, a clutch disk assembly is known, by means of which a torque is transferrable from an input shaft via a hysteresis mechanism to an output shaft. The hysteresis mechanism is formed by a cam mechanism arranged between a sub-plate and a thrust plate according to this reference. When a certain relative rotation of the input and the output shaft is effected, a spring load is applied to the cam mechanism, which further increases in accordance with a hysteresis curve when the relative rotation angle increases, and thus allows the transfer of a larger torque.

So, the known clutch disk assembly according to the FR-A-2574 014 substantially follows the principle of the prior art according to the JP-OS 58-637.

It is an object of the invention to provide a clutch disk assembly with a hysteresis mechanism which has improved wear characteristics.

According to the invention, this problem is solved by the features of the main claim.
According to this claim 1, the hysteresis mechanism comprises a plate member with cam faces formed thereon and a spring member comprising a number of projections. The invention now consists in the cam faces as well as the projections being in contact with the opposing plate member and the opposing spring member, respectively, so that hereby the overall contact surface between two components is increased. The projections as well as the cam faces may preferably be designed in such a way that in the normal state of the clutch disk assembly, i.e. if there is no relative rotation of the input shaft with respect to the output shaft, no force of the spring member is exerted on the plate member. In this way, the abrasion at the projections and the cam faces is reduced and the life of the entire device is prolonged.

### BRIEF DESCRIPTION OF THE DRAWINGS

These and other objects, features and advantages of the present invention will become fully apparent on reading the following detailed description with reference to the accompanying drawings, wherein like members bear like reference numerals, and wherein:
FIG. 1 is a sectional view of a clutch disk assembly illustrate a first embodiment of the present invention taken along the line I-I in Fig. 2.
FIG. 2 is a front view and a partially cut-out section of a clutch disk assembly of the present invention.
FIG. 3 is a front view of a cam mechanism of the present invention.
FIG. 4 is a sectional view of a cam mechanism in Fig. 3.
FIG. 5 is a sectional view of a cam mechanism taken along the line V-V in Fig. 3.
FIG. 6 is a graph of the hysteresis operation of the clutch disk assembly of the present invention.
FIG. 7 is a sectional view of a clutch disk assembly illustrate a second embodiment of the present invention taken along the line I-I in Fig. 2.
FIG. 8 is a sectional view of a hysteresis mechanism in Fig. 7.
FIG. 9 is a sectional view of the conventional clutch disk assembly.
FIG. 10 is a sectional view of the conventional clutch disk assembly taken along the line VIII-VIII in Fig. 9.

### DETAILED DESCRIPTION OF PREFERRED EMBODIMENTS OF THE INVENTION

In a first embodiment, the clutch disk assembly comprises a hub 1 which is connected to an output shaft (not shown in the Figs.) by a spline 1a. A hub flange 2 which is coaxially engaged with the hub 1 by splines 1b and 2b and a disk plate 4 and sub plate 3 are coaxially rotatably connected together via hysteresis mechanisms 23, 24 which are disposed between the disk plate 4, the sub plate 3 and the hub 1 and the flange 2. The splines 1b, 2b have a circumferential gap and rotate relatively through a predetermined angle. Between the hub 1 and the hub flange 2, a recess 33 is provided. In the recess 33, a torsion spring 17 is positioned through seats 16, 18. When the hub 1 and the hub flange 2 are relatively rotated, torque is transmitted from the hub flange 2 to the hub 1 through the torsion spring 17.

Facing plates 29 are fixed on the outer side of the disk plate 4, and friction pads 31 are fixed on the both sides of the facing plates 29 by rivets 30. The disk plate 4 is integrally fixed to the sub plate 3 by pins 27. The hysteresis mechanism 23 is positioned between the hub 1 and the plates 3, 4 while the hysteresis mechanism 24 is positioned between the hub flange 2 and the plates 3, 4. A recess 2c is formed, on an outer periphery of the hub flange 2 and the pin 27 is circumferentially rotatable across the extent of the recess 2c of the hub flange 2. In the hub flange 2, the disk plate 4 and the sub plate 3 are positioned relative to one another and connected by torsion springs 19, 25, 26 interposed in recesses provided in each plate.

The first hysteresis mechanism 23 includes a centering bushing 20, a thrust washer 12, a thrust lining 13 and a washer 14 between the disk plate 4 and the hub 1. A cone spring 8, a thrust plate 7, a thrust lining 6 and a thrust washer 5 complete the first hysteresis mechanism by being positioned between the sub plate 3 and the hub 1.

The second hysteresis mechanism 24 includes a thrust lining 43, a cam plate 44, a cam spring 45, a thrust plate 46 and a thrust lining 47 between the disk plate 4 and the hub flange 2, a cone spring 48, a thrust plate 49 and a thrust lining 40 complete the second hysteresis mechanism 24.

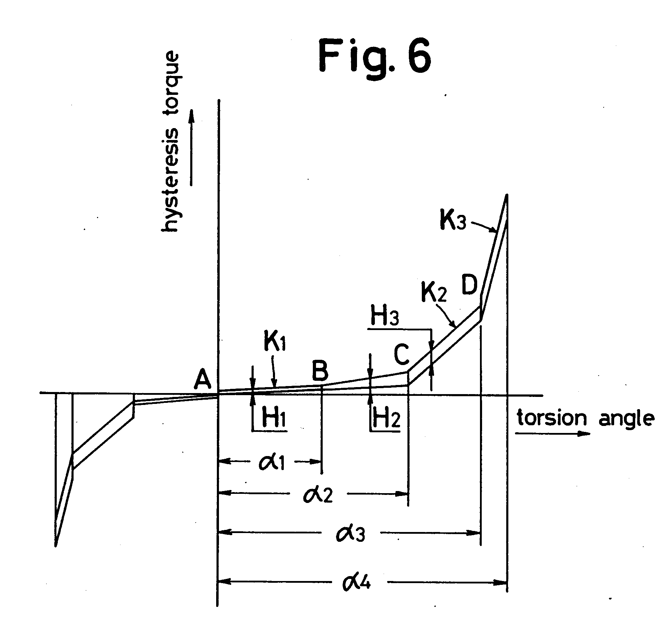

The first hysteresis mechanism 23 determines the hysteresis in the range of the torsion angle from A to C in Fig. 6, and the second hysteresis 24 in the range of the torsion angle C to E in Fig. 6. A continuous variable hysteresis in proportion to the torsion angle is shown at H2 in Fig. 6.

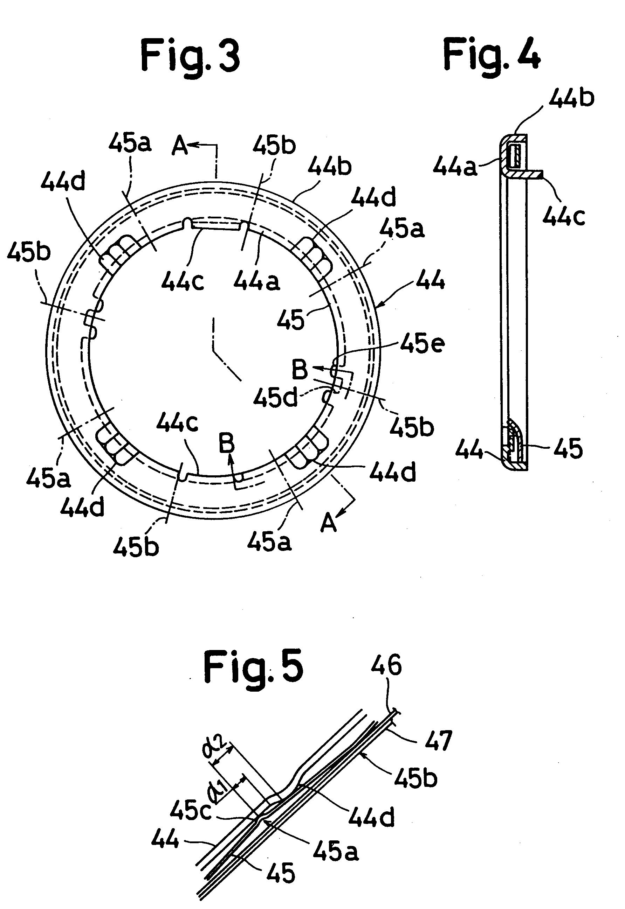

The cam plate 44, which may be formed by an axial pressing process, has a ring shaped flat part 44a, a flange part 44b and protrusions 44c. The flange part 44b is in substantially cylindrical form at an outer peripheral edge of the flat part 44a. The protrusions 44c are formed axially along an inner side of the part 44a. The protrusions 44c are fixedly inserted in the recesses 2d, formed in the hub 1. Therefore, the cam plate 44 is circumferetially fixed to the hub flange 2 through the protrusions 44c. On the flat part 44a, four cam faces 44d are circumferetially formed at equal intervals. Each cam faces 44d is trapezoid-shaped and projects into contact with the cam spring 45. The cam spring 45 is interposed in the space between the flange part 44b and the protrusions 44c. The cam spring 45 is a ring shaped leaf spring and has, at circumferentially equal intervals mutual tops or raised portions 45a and roots 45b (shown by center lines in Fig. 3) in a substantially undulating form. The tops or raised port ions 45a extend toward the cam plate 44 and have curved projections 45c extending across the end of the tops 45a. As shown in Fig. 4 and 5, the cam spring 45 is positioned interiorly of the cylindrical cam plate 44 such that the side of the curve projection 45c is contactable with the cam plate 44 and the rear or opposite side of the curved projections is contactable with the thrust plate 46 which is connected circumferetially to the cam spring 45 through a recess 45d. The thrust lining 47 is interposed between the thrust plate 46 and the hub flange 2. The projection 14a of the thrust washer 14 of the hysteresis mechanism 23 is engaged with forked projections 45e through the recess 45d. The amount of hysteresis which is generated between two cam faces of the curved projection, through the thrust lining 47, is controlled by the spring constant coefficient, amount of the deflection (according to the shape of the cam face), and the like of the spring 45.

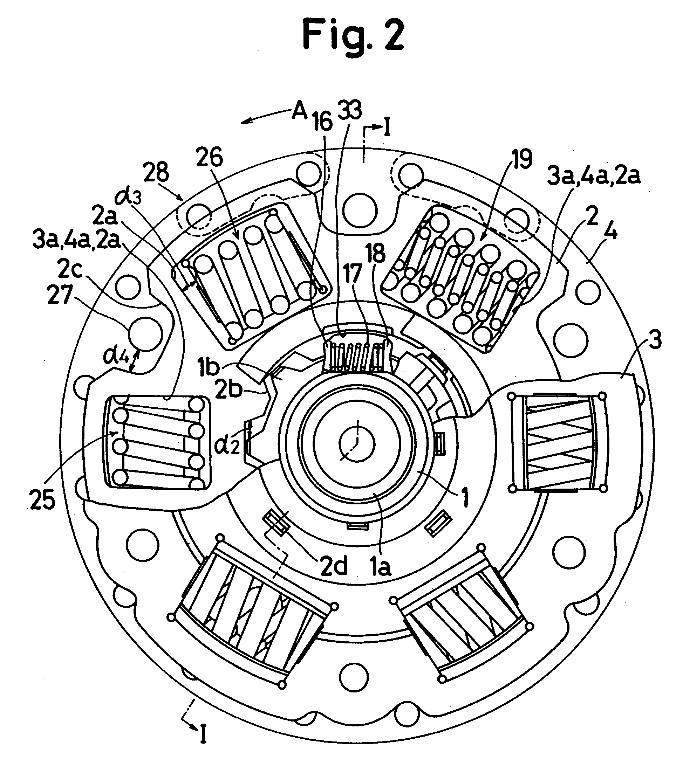

The torque of the plates 3, 4 in the direction A in Fig. 2 is transmitted to the centering bushing 20, the thrust plate 7, and to the thrust linings 13 and 6. In accordance with the first hysteresis mechanism 23, the hysteresis torque H1 is shown in Fig. 6. When the amount of the input torque is over the point A, the plates 3, 4 are slidably moved relative to the hub 1. At the time, torque is transmitted to the hub flange 2 through the plates 3, 4 and the hysteresis mechanism 24, further transmitted to the seat 18 through the spline 2b compresses the spring 17. In this compressing process the first spring constant coefficient k1 is determined according to the spring constant coefficient of the spring 17. The cam spring 45 is fixed to the hub 1 through the thrust washer 14 and the cam plate 4, engaged with the flange 2, is rotated with the hub flange 2. The cam plate 44 is moved through an angle d1 and the cam face 44d is contacted with the curve port ion 45c. After this condition, the cam spring 45 begines a deflection process. In this deflection process, the cam face 44d presses the curve projections 45c, therefore, the cam spring 45 deflects and a spring load is created in relation with the amount of the deflection. This amount of the deflection increases in relation with the torsion angle according to the cam operation, therefore, the spring-load increases in relation to the torsion angle. The hysteresis H2 according to the spring-load occurs between the hub flange 2 and the thrust lining 47 and increases in relation to the torsion angle (shown between B and C in Fig. 6). The cam plate 44 is moved to angle d2 and the curve projection 45c contacts with the bottom of the cam face 44d. At this time, the deflection becomes maximum and the hysteresis torque is shown at H3 (point C). In this position, the spline 1b of the hub 1 is engaged with the spline 2b of the flange 2, When the input torque increases over the point C, the plate 3, 4 are slidably moved relative to the hub flange 2, and the input torque is transmitted to the springs 19, 25. In this compression process (d3), the second characteristic shows k2 according to the rigidity of the springs 19, 25 through the recesses 3a, 4a of the plates 3, 4 and compresses the springs 19, 25. At the end of this process, one end of the spring 26 is in contact with the recess 2a of the hub flange 2 and, therefore, the input torque is transmitted to the hub flange 2 through the recess 2a. The spring 2b is positioned in the recesses 4a, 3a with a predetermined compression therefore, the hysteresis torque increases to point D. Thereafter, the third characteristic shows k3 according to the spring constant coefficient of the spring 26. At the end of the compression process d4, the pin 27 is contacted with a side of recess 2c of the hub flange 2. Then, the input torque is transmitted to the hub flange 2 through the pin 27 wherein the plates 3, 4 are integrally rotated with both of the hub 1 and the hub flange 2.

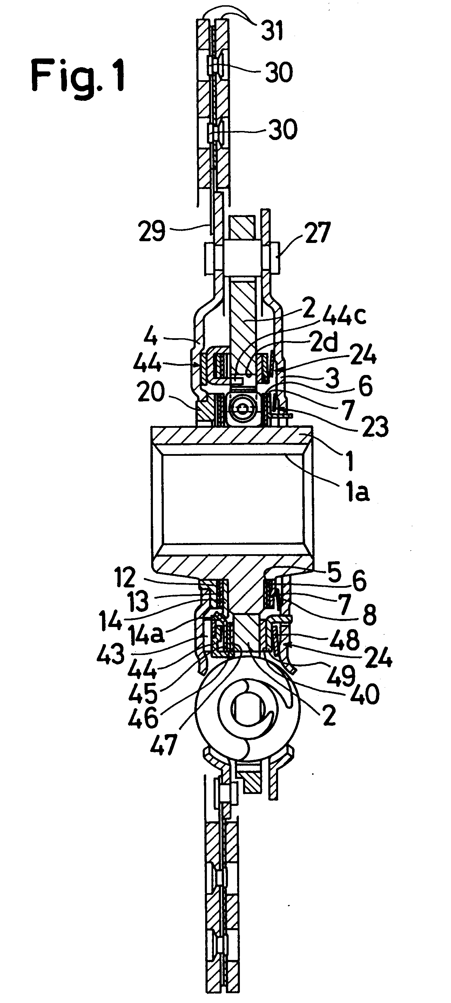

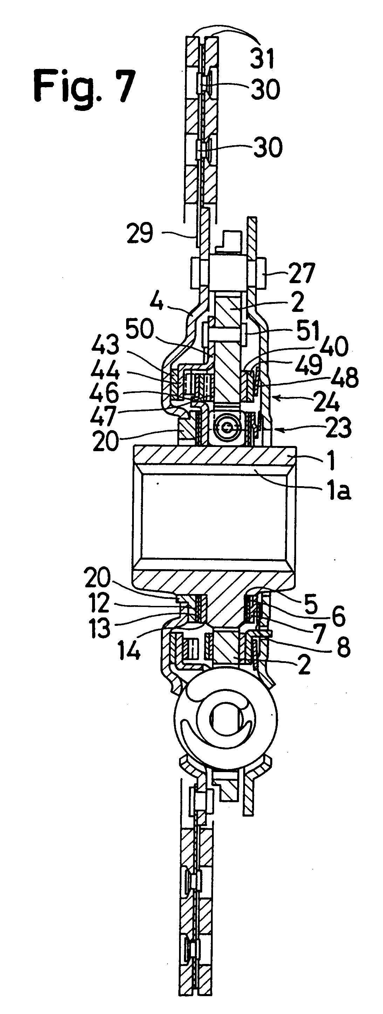

In a second embodiment, a clutch disk assembly shown in Fig. 7, 8 is substantially of the same construction except for a shape of the cam plate 44 in Fig. 1. The cam plate 44 has plural flange parts 50, which are formed along the side face of the hub flange 2, wherein the plural flange parts 50 are provided on the outer periphery of the cam plate 44 at equal intervals. The cam plate 44 is integrally disposed between the flange parts 50 and the hub flange 2 by a rivet 51 and, due to the plural flange parts 50 provided on the outer periphery of the cam plate 44, the load of the cone spring 48 is only acted to the thrust plate 49 and thrust lining 40, 43, and is not acted to the cam spring 45 and the thrust plate 46 and the thrust lining 47. As a result, the stable hysteresis can be obtained.

The cam mechanism of the invention can be positioned adjacent the next space (in the cylindrical plate part) independently from the known hysteresis mechanism and, therefore, the cam mechanism permits continuous variable hysteresis torque in proportion to the torsion angle across a predetermined angle range.

The wave leaf spring can easily provide the hysteresis characteristic curve according to a class of vehicles, and partially the continuous variable hysteresis characteristic curve.

Change of the form of the cam face with respect to the spring member and to the plate member or of the spring constant coefficient of the spring member can provide a choice in the amount of the hysteresis developed.

A clutch disk assembly is provided with a continuous variable hysteresis mechanism which reduces noises or vibrations of the driving system. The continuous variable hysteresis mechanism includes a plate member, a spring member and a friction lining member between the hub member and the disk member. A cam face is provided on one of the plate member and/or spring member, a projection on one of the spring member and/or the plate member. An engaging mechanism is positioned between the plate member and the hub member and the continuous variable hysteresis is generated between the disk member and the hub member.

## Claims

1. A clutch disk assembly comprising:
a hub member (1) connected with an output shaft,
a disk member (4) coaxially and rotatably mounted to said hub member (1) and connected to an input shaft,
a hysteresis mechanism (24) which comprises a plate member (44), a cam spring member (45) and a friction lining member (47) and is arranged between said disk member (4) and a hub flange (2) rotatably engaged with said hub member (1) by an engaging mechanism (17, 1b, 2b) for establishing a hysteresis torque between said hub member (1) and said disk member (4),
**characterized in that**
said hub flange (2) is fixedly connected to said plate member (44) which is provided with a recess of constant axial length in which said cam spring member (45) is positioned, wherein
a cam face (44d) is formed on one of said plate member (44) and said cam spring member (45) which projects so as to contact the other one of said plate member (44) and said cam spring member (45), and
a projection (45a) is formed on the other one of said plate member (44) and said cam spring member (45) which slidably contacts said cam face (44d) within a range of relative angular displacement between said plate member (44) and said cam spring member (45), whereby said hysteresis mechanism (24) generates a continous variable hysteresis torque via a predetermined torsional angle when said hub
member (1) and said disk member move relative to one another.

2. A clutch disk assembly according to claim 1,
**characterized in that**
said hub flange (2) is connected to said plate member (44) by rivets (51).

3. A clutch disk assembly according to claim 1 or 2,
**characterized in that**
said cam member (44) has a flange part (50) arranged at an outer periphery thereof and formed along a side face of said hub flange (2) in a manner preventing relative radial movement therebetween.

4. A clutch disk assembly according to claim 1,
**characterized in that**
said plate member (44) comprises an outer side edge (44b) of substantially cylindrical shape, and
said recess is provided in an inner portion of said outer edge (44b).

5. A clutch disk assembly according to claim 1,
**characterized in that**
said cam spring member (45) is a wave leaf spring.

6. A clutch disk assembly according to one of claims 1 to 5,
**characterized by**
a further hysteresis mechanism (23) which includes a centering bushing (20), a cone spring (8) and at least one thrust lining (6, 13) and is positioned between said hub member (1) and said disk member (4) in order to transmit a torque of said disk member (4) via said centering bushing (20) and said thrust lining (6, 13) to said hub member (1).

7. A clutch disk assembly according to one of claims 1 to 6,
**characterized in that**
said projection (45a) is contactable with the bottom of said cam face (44d).

## Patentansprüche

1. Kupplungsscheibe mit
einem Nabenbauteil (1), das an einer Ausgangswelle angeschlossen ist,
einem Scheibenbauteil (4), das koaxial und drehbar an das Nabenbauteil (1) angebaut und mit einer Eingangswelle verbunden ist,
einem Hysteresemechanismsu (24), der ein Plattenbauteil (44), ein Nockenfederbauteil (45) und ein Reibfutterbauteil (47) aufweist und zwischen dem Scheibenbauteil (4) und einem Nabenflansch (2) angeordnet ist, der mit dem Nabenbauteil (1) durch einen Eingriffsmechanismus (17, 1b, 2b) drehbar in Eingriff ist, um ein Hysteresedrehmoment zwischen dem Nabenbauteil (1) und dem Scheibenbauteil (4) aufzubauen,
**dadurch gekennzeichnet, daß**
der Nabenflansch (2) fest an dem Plattenbauteil (44) befestigt ist, welches mit einer Vertiefung von konstanter axialer Länge versehen ist, in der das Nockenfederbauteil (45) positioniert ist, wobei
eine Nockenfläche (44d) entweder auf dem Plattenbauteil (44) oder dem Nockenfederbauteil (45) ausgebildet ist, die derart vorsteht, daß sie entweder das Plattenbauteil (44) oder das Nockenfederbauteil (45) berührt, und
ein Vorsprung (45a) auf dem jeweils anderen, entweder dem Plattenbauteil (44) oder dem Nockenfederbauteil (45) ausgebildet ist, der gleitend die Nockenfläche (44d) innerhalb eines Bereichs eines Relativwinkelversatzes zwischen dem Plattenbauteil (44) und dem Nockenfederbauteil (45) berührt, wodurch der Hysteresenmechanismus (24) ein kontinuierlich variables Hysteresedrehmoment über einen vorbestimmten Torsionswinkel dann erzeugt, wenn das Nabenbauteil (1) und das Scheibenbauteil sich relativ zueinander bewegen.

2. Kupplungsscheibenbaugruppe gemäß Anspruch 1, **dadurch gekennzeichnet, daß**
der Nabenflansch (2) mit dem Plattenbauteil (44) durch Niete (51) verbunden ist.

3. Kupplungsscheibenbaugruppe gemäß Anspruch 1 oder 2, **dadurch gekennzeichnet, daß**
das Nockenbauteil (44) einen Flanschabschnitt (50) aufweist, der an dessen äußerem Umfang angeordnet ist und entlang einer Seitenfläche des Nabenflansches (2) in einer Weise ausgebildet ist, die eine radiale Relativbewegung zwischen beiden Bauteilen verhindert.

4. Kupplungsscheibenbaugruppe gemäß Anspruch 1, **dadurch gekennzeichnet, daß**
das Plattenbauteil (44) eine äußere Seitenkante (44b) in einer im wesentlichen zylindrischen Form aufweist, wobei die Vertiefung in einem inneren Abschnitt der äußeren Kante (44b) vorgesehen ist.

5. Kupplungsscheibenbaugruppe gemäß Anspruch 1, **dadurch gekennzeichnet, daß**
das Nockenfederbauteil (45) eine Wellenblattfeder ist.

6. Kupplungsscheibenbaugruppe gemaß einem der Ansprüche 1 bis 5, **gekennzeichnet durch**
einen weiteren Hysteresemechanismus (23), der eine Zentrierhülse (20), eine Tellerfeder (8) und zumindes ein Druckfutter (6, 13) aufweist und zwischen dem Nabenbauteil (1) und dem Scheibenbauteil (4) angeordnet ist, um ein Drehmoment von dem Scheibenbauteil (4) über die Zentrierhülse (20) und dem Druckfutter (6, 13) auf das Nabenbauteil (1) zu übertragen.

7. Kupplungsscheibenbaugruppe gemäß einem der Ansprüche 1 bis 6, **dadurch gekennzeichnet, daß**
der Vorsprung (45a) mit der Wurzel der Nockenfläche (44d) in Kontakt bringbar ist.

## Revendications

1. Disque d'embrayage comprenant :
un élément de moyeu (1) relié à un arbre de sortie, un élément de disque (4) monté coaxialement sur ledit élément de moyeu (1) et pouvant tourner avec lui et connecté à un arbre d'entrée, un mécanisme d'hystérésis (24) qui comporte un élément de plaque (44), un élément de ressort de came (45) et un élément de garniture de frottement (47) et est disposé entre ledit élément de disque (4) et un flasque (2) du moyeu mis en contact rotatif avec ledit élément de moyeu (1) par un mécanisme de mise en contact (17, 1b, 2b) afin d'établir un couple d'hystérésis entre ledit élément de moyeu (1) et ledit élément de disque (4),
caractérisé en ce que :
ledit flasque (2) du moyeu est relié de façon fixe audit élément de plaque (44) qui comporte un évidement de longueur axiale constante dans lequel ledit élément (45) de ressort de came est placé, où
une face de came (44d) est formée sur l'un dudit élément de plaque (44) et dudit élément (45) de ressort de came qui est en saillie de manière à être en contact avec l'autre dudit élément de plaque (44) et dudit élément (45) de ressort de came, et
une saillie (45a) est formée sur l'autre dudit élément de plaque (44) et dudit élément (45) de ressort de came qui est en contact par coulissement avec ladite face de came (44d) à l'intérieur d'une gamme de déplacements angulaires relatifs entre ledit élément de plaque (44) et ledit élément (45) de ressort de came, d'où il résulte que ledit mécanisme d'hystérésis (24) engendre un couple d'hystérésis variable en continu via un angle de torsion prédéterminé lorsque ledit élément de moyeu (1) et ledit élément de disque se déplacent l'un par rapport à l'autre.

2. Disque d'embrayage selon la revendication 1,
caractérisé en ce que :
ledit flasque (2) du moyeu est relié audit élément de plaque (44) par des rivets (51).

3. Disque d'embrayage selon la revendication 1 ou 2,
caractérisé en ce que :
ledit élément de came (44) comporte une partie à flasque (50) disposée à sa périphérie extérieure et formée le long d'une face latérale dudit flasque (2) du moyeu de façon à éviter un mouvement radial relatif entre eux.

4. Disque d'embrayage selon la revendication 1, caractérisé en ce que :
ledit élément de plaque (44) comprend un bord latéral extérieur (44b) de forme sensiblement cylindrique, et
ledit évidement est pratiqué dans une partie intérieure dudit bord extérieur (44b).

5. Disque d'embrayage selon la revendication 1,
caractérisé en ce que :
ledit élément (45) de ressort de came est un ressort à lame ondulé.

6. Disque d'embrayage selon l'une des revendications 1 à 5,
caractérisé par :
un autre mécanisme d'hystérésis (23) qui comporte une douille de centrage (20), un ressort conique (8) et au moins une garniture de butée (13), et est placé entre ledit élément de moyeu (1) et ledit élément de disque (4) de manière à transmettre le couple dudit élément de disque (4), via ladite douille de centrage (20) et ladite garniture de butée (13), audit élément de moyeu (1).

7. Disque d'embrayage selon l'une des revendications 1 à 6,
caractérisé en ce que :
ladite saillie (45a) peut venir en contact avec la partie inférieure de ladite face de came (44d).
